Europäisches Patentamt

European Patent Office

Office européen des brevets

(19)

(11) EP 0 548 660 B1

(12) **FASCICULE DE BREVET EUROPEEN**

(45) Date de publication et mention
de la délivrance du brevet:
**13.11.1996  Bulletin 1996/46**

(51) Int Cl.6: **H01M 4/60**, H01M 10/40,
H01M 14/00

(21) Numéro de dépôt: **92120909.4**

(22) Date de dépôt: **08.12.1992**

(54) **Supercondensateur à base de polymère conducteur**

Leitfähiges Polymer enthaltender Superkondensator

Conducting polymer containing supercapacitor

(84) Etats contractants désignés:
**DE DK FR GB IT**

(30) Priorité: **13.12.1991  FR 9115521**

(43) Date de publication de la demande:
**30.06.1993  Bulletin 1993/26**

(73) Titulaire: **ALCATEL ALSTHOM COMPAGNIE
GENERALE D'ELECTRICITE
F-75382 Paris Cédex 08 (FR)**

(72) Inventeurs:
• **Andrieu, Xavier
F-91220 Bretigny sur Orge (FR)**

• **Kerreneur, Laurence
F-91460 Marcoussis (FR)**

(74) Mandataire: **Weinmiller, Jürgen et al
Lennéstrasse 9
Postfach 24
82336 Feldafing (DE)**

(56) Documents cités:
EP-A- 0 093 539          EP-A- 0 105 768
EP-A- 0 136 635          EP-A- 0 265 821
EP-A- 0 319 182          US-A- 3 288 641

• PATENT ABSTRACTS OF JAPAN vol. 12, no. 94
(E-593)(2941) 26 Mars 1988 & JP-A-62226568

## Description

La présente invention concerne un supercondensateur à base de polymère conducteur.

Les polymères conducteurs électroniques dopés p, comme le polypyrrole, le polythiophène, la polyaniline présentent en électrochimie un comportement de type pseudo-capacitif; autrement dit la quantité d'électricité stockée dans le matériau est proportionnelle à la tension appliquée. Cette propriété disparait quand le polymère est dédopé et devient isolant.

Ces polymères conducteurs ont des capacités spécifiques très élevées, de l'ordre de 200 F/g, ce qui est bien supérieur à ce que L'on a avec des composés carbonés de type charbon actif. Ces matériaux peuvent donc être utilisés avantageusement comme matière active d'électrode dans des supercondensateurs.

Les brevets EP-A-300330 et FR-A-89 10952 décrivent des supercondensateurs mettant en oeuvre le polypyrrole. Toutefois on constate que l'énergie stockée dans ces supercondensateurs ($1/2\ CV^2$) n'est pas très élevée en raison de leur faible tension (1,2 à 1,3 volts). C'est le glissement du potentiel moyen des électrodes qui est responsable de cette faible tension.
Si l'on prend l'exemple d'un supercondensateur dont Les électrodes sont à base de polypyrrole (ppy) dopé par des ions $ClO_4^-$, le fonctionnement en décharge peut être schématisé par les réactions suivantes:

- Electrode négative

$$ppy + xClO_4^- \rightarrow ppy^{x+}(ClO_4^-)_x + xe^-$$

- Electrode positive :

$$ppy^{2x+} + (ClO_4^-)_{2x} + xe^- \rightarrow ppy^{x-}(ClO_4^-)_x + xClO_4^-$$

L'électrode négative se dope et l'électrode positive se dédope.

On constate qu'à cause des courants de fuite à haut potentiel, d'un rendement faradique faible des électrodes ou d'une surtension importante, l'électrode négative est "poussée" par l'électrode positive vers une zone non capacitive. Cela aboutit à une perte de capacité du condensateur (perte de capacité définitive dans Le cas d'un cyclage unipolaire).

La présente invention a pour but de pallier ces inconvénients et de réaliser un supercondensateur à base de polymère conducteur dont la tension soit proche de la valeur phéorique possible, par exemple 2 volts avec le polypyrrole.

La présente invention a pour objet un supercondensateur comportant une électrode positive, une électrode négative, toutes deux à base de polymère conducteur électronique dopé p, et un électrolyte, caractérisé par le fait qu'il comporte en outre une navette électrochimique constituée par un composé organique soluble dans ledit électrolyte, dans une proportion au moins égale à $10^{-3}$ mole par litre, dont le potentiel redox se situe dans la zone non capacitive dudit polymère conducteur électronique, et qui se réduit à l'électrode négative et s'oxyde à l'électrode positive de façon réversible si le potentiel de ces électrodes le permet.

Ainsi, au cours de la charge, si le potentiel de l'électrode négative devient égal ou inférieur au potentiel redox de ladite navette électrochimique, cette dernière est réduite. Elle est ensuite régénérée par oxydation à l'électrode négative.

Il en résulte que l'excursion en potentiel de l'électrode négative vers la zone non capacitive du polymère est limitée.

A titre indicatif la concentration de la navette dans l'électrolyte peut être comprise entre $10^{-3}$ et 1 mole/litre.
Cela dépend principalement:

- de sa solubilité
- de sa constante de diffusion
- du nombre d'électrons échangés
- de la géométrie du supercondensateur.
- Ledit polymère est de préférence choisi parmi le polypyrrole, le polythiophène, la polyaniline et leurs dérivés.

L'électrolyte est de préférence aprotique et à un domaine d'électroactivité étendu; il est du type des électrolytes utilisés dans les générateurs à base de lithium.

D'autres caractéristiques et avantages de la présente invention apparaîtront au cours de la description suivante de modes de réalisation donnés à titre illustratif mais nullement limitatif. Dans le dessin annexé :

- La figure 1 montre des courbes de cyclage (voltampérogrammes) pour un supercondensateur selon l'art antérieur.
- La figure 2 montre des courbes de cyclage pour un supercondensateur selon l'invention.
- La figure 3 montre des courbes analogues à celles de la figure 1 pour un supercondensateur de l'art antérieur.
- La figure 4 montre des courbes analogues à celles de la figure 2, pour un supercondensateur selon l'invention.

Exemple 1 Art Antérieur

Un supercondensateur est réalisé à partir de deux électrodes de polypyrrole de 16 mg chacune. Il y a dans chaque électrode 20% de noir de carbone. Le polypyrrole est préparé selon le brevet FR-A.8910952.
L'électrolyte est une solution de carbonate de propylène $LiClO_4$ 1M.

L'ensemble est monté dans une cellule d'essai en TEFLON® qui comporte une électrode de référence en lithium afin de mesurer Le potentiel de chaque électrode de polypyrrole. Après montage et cyclage entre 0 et 2V les caractéristiques du supercondensateur sont les suivantes:

tension utile : 1,18V
capacités : 0,22 mAh; 0,67F

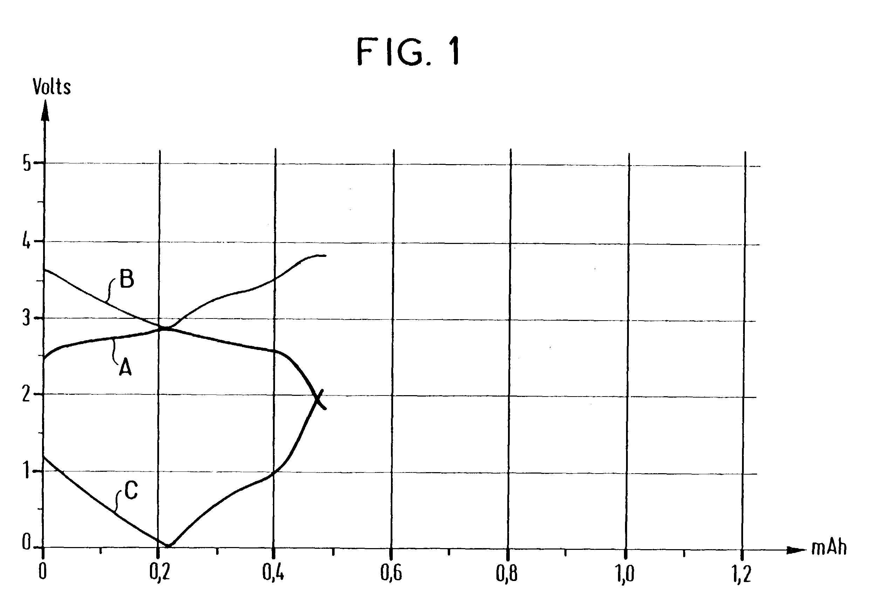

Les courbes de cyclage se trouvent sur la figure 1 (abscisses en mAh et ordonnées en volts).
La courbe A correspond au potentiel de l'électrode négative, la courbe B à celui de l'électrode positive, et la courbe C à la tension de la cellule.

## Exemple 2

On prend le supercondensateur de l'exemple 1. On ajoute en cours de cyclage à la solution électrolytique de la trinitrofluorénone à raison de 6/1000 (en poids).
Les caractéristiques mesurées après cet ajout sont les suivantes:

tension utile : 1,48V
capacités : 0,36mAh, 0,88F.

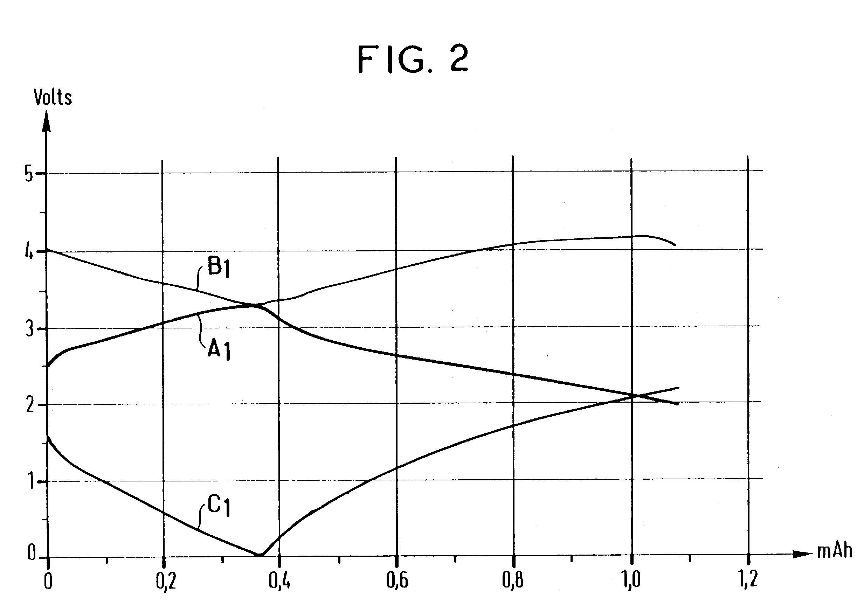

Les courbes de cyclage se trouvent sur la figure 2.
Les courbes A1, B1, C1, sont à comparer aux courbes A,B,C de l'exemple 1.
L'énergie du supercondensateur (1/2 CV2) a été augmentée de 107% vis-à-vis de celle de l'exemple 1.

## Exemple 3 Art Antérieur

On opère de la même manière que dans l'exemple 1 sauf pour la masse de polypyrrole de chaque électrode qui est de 13mg.
Les caractéristiques mesurées après montage sont les suivantes:

tension utile : 1,26V
capacités : 0,15mAh, 0,5F

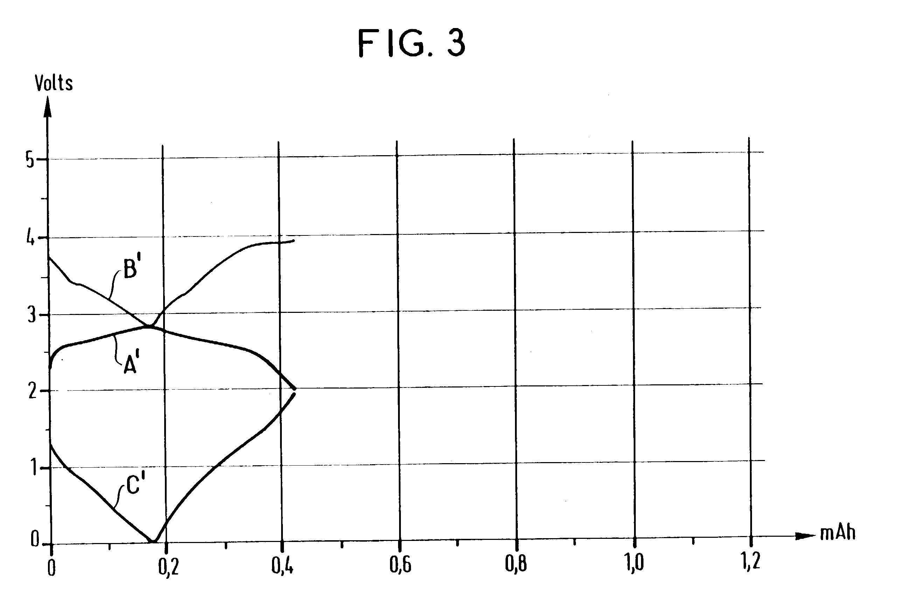

Les courbes de cyclage se trouvent sur la figure 3, et sont référencées A', B', C'.

## Exemple 4

On prend le supercondensateur de l'exemple 1 et on ajoute au cours du cyclage du 9,10 phénanthrènequinone dans la proportion de 6/1000 (en poids).
Les caractéristiques mesurées sont les suivantes:

tension utile : 1,6V
capacités : 0,4mAh, 0,9F

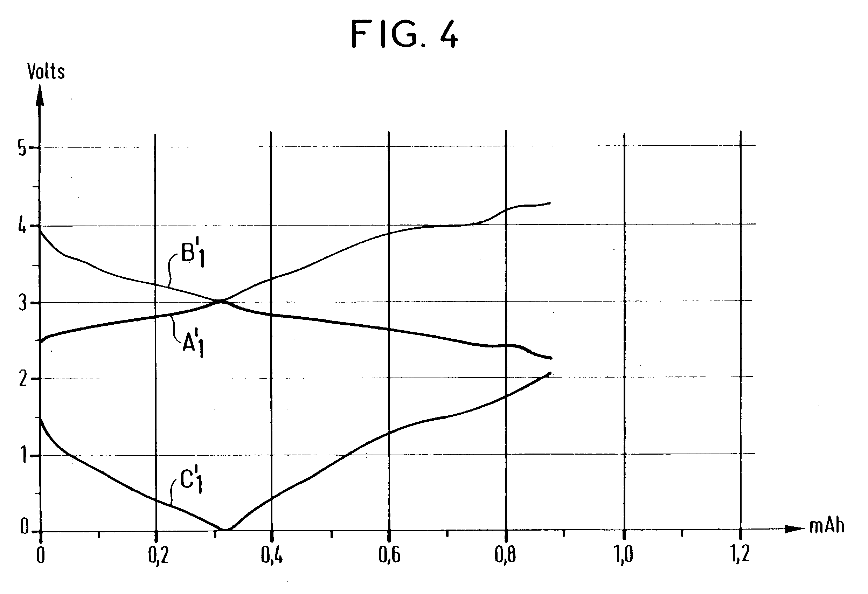

Les courbes de cyclage se trouvent sur la figure 4 et sont référencées A'1, B'1, C'1.
L'énergie du supercondensateur a été augmentée de 170%

Bien entendu, l'invention n'est pas limitée aux modes de réalisation précédents.

## Revendications

1. Supercondensateur comportant une électrode positive, une électrode négative, toutes deux à base de polymère conducteur électronique dopé p, et un électrolyte, caractérisé par le fait qu'il comporte en outre une navette électrochimique constituée par un composé organique soluble dans ledit électrolyte, dans une proportion au moins égale à $10^{-3}$ mole par litre, dont le potentiel redox se situe dans la zone non capacitive dudit polymère conducteur électronique, et qui se réduit à l'électrode négative et s'oxyde à l'électrode positive de façon réversible si le potentiel de ces électrodes le permet.

2. Supercondensateur selon la revendication 1, caractérisé par le fait que ledit polymère conducteur est choisi parmi le polypyrrole, le polythiophène, la polyaniline et leurs dérivés.

3. Supercondensateur selon l'une des revendications précédentes, caractérisé par le fait que ledit électrolyte est aprotique.

## Patentansprüche

1. Superkondensator, der eine positive Elektrode, eine negative Elektrode, beide auf der Basis eines p-dotierten elektronenleitenden Polymers, und einen Elektrolyten aufweist, dadurch gekennzeichnet, daß er außerdem ein elektrochemisches Schiffchen aufweist, das aus einer in diesem Elektrolyten löslichen organischen Verbindung mit einem Anteil von mindestens gleich $10^{-3}$ Mol je Liter besteht, dessen Redox-Potential in der nicht-kapazitiven Zone des elektronenleitenden Polymers liegt und das an der negativen Elektrode reduziert wird und an der positiven Elektrode in reversibler Weise oxidiert wird, falls das Potential dieser Elektroden es erlaubt.

2. Superkondensator nach Anspruch 1, dadurch gekennzeichnet, daß das leitende Polymer unter Polypyrrol, Polythiophen, Polyanilin und ihren Derivaten ausgewählt wird.

3. Superkondensator nach einem der vorhergehenden Ansprüche, dadurch gekennzeichnet, daß der Elektrolyt aprotisch ist.

## Claims

1. A super-capacitor comprising a positive electrode, a negative electrode, both based on a p-doped electron conductive polymer, and an electrolyte, characterized in that it further comprises an electrochemical shuttle constituted by an organic compound soluble in said electrolyte, in a proportion at least equal to $10^{-3}$ mole per liter, of which the redox potential lies in a non-capacitive region of said electronic polymer conductor, and which reduces at the negative electrode and oxidizes at the positive electrode in a reversible manner, when the potential at these electrodes allows.

2. A super-capacitor according to claim 1, characterized in that said conductive polymer is selected from polypyrrole, polythiophene, polyaniline and their derivatives.

3. A super-capacitor according to either of the preceding claims, characterized in that said electrode is aprotic.

# FIG. 1

# FIG. 2

EP 0 548 660 B1

FIG. 3

# FIG. 4

EP 0 548 660 B1